**Europäisches Patentamt**

(19) **European Patent Office**

**Office européen des brevets**

(11) Veröffentlichungsnummer: **0 154 760**
**B1**

(12) **EUROPÄISCHE PATENTSCHRIFT**

(45) Veröffentlichungstag der Patentschrift:
20.05.87

(21) Anmeldenummer: **84730142.1**

(22) Anmeldetag: **14.12.84**

(51) Int. Cl.⁴: **H 02 H 3/08,** H 02 H 1/06

(54) **Schaltungsanordnung zur Überwachung eines Stromes.**

(30) Priorität: **24.02.84 DE 3407312**

(43) Veröffentlichungstag der Anmeldung:
**18.09.85 Patentblatt 85/38**

(45) Bekanntmachung des Hinweises auf die Patenterteilung:
**20.05.87 Patentblatt 87/21**

(84) Benannte Vertragsstaaten:
**CH DE LI SE**

(56) Entgegenhaltungen:
**DE-A-2 338 566**
**GB-A-2 095 058**
**US-A-3 717 796**

(73) Patentinhaber: **Siemens Aktiengesellschaft Berlin und München, Wittelsbacherplatz 2, D-8000 München 2 (DE)**

(72) Erfinder: **Krieser, Friedrich, Dipl.- Ing., Weisswasserweg 11, D-1000 Berlin 45 (DE)**

EP 0 154 760 B1

## Beschreibung

Die Erfindung bezieht sich auf eine Schaltungsanordnung zur Überwachung eines Stromes mit einer eingangsseitig angeordneten, aus dem zu überwachenden Strom gespeisten Reihenschaltung aus einer Zenerdiode und einem Ohmschen Meßwiderstand, wobei ein Abgriff der Reihenschaltung von dem gemeinsamen Schaltungspunkt der Zenerdiode und des Meßwiderstandes gebildet ist, mit einem mit der Reihenschaltung verbundenen Meßteil und mit einer parallel zur Zenerdiode liegenden Schalteinheit mit einem Relais.

Bei einer bekannten Schaltungsanordnung dieser Art (DE-A- 31 09 330) ist der Reihenschaltung ein Spannungsteiler aus zwei Ohmschen Widerständen parallel geschaltet. An einem Abgriff dieses Spannungsteilers ist ein Eingangskomparator als Meßteil angeschlossen, dessen Betriebsspannung mittels der Zenerdiode gewonnen ist. Über ein Impulsdehnungsglied ist dem Eingangskomparator eine Schalteinheit nachgeordnet, die aus einem Ausgangskomparator und einem diesem nachgeordneten Relais besteht; auch die Schalteinheit wird mittels der Zenerdiode der Reihenschaltung mit Betriebsenergie versorgt.

Die bekannte Schaltungsanordnung zur Überwachung eines Stromes hat zwar den Vorteil, daß zu ihrer Betriebsspannungsversorgung keine zusätzliche Hilfsspannungsquelle erforderlich ist, hat jedoch kein Mittel zur Bestimmung des Abstandes zwischen der Ansprechspannung und der Rückfallspannung, so daß die entsprechenden Werte des zu überwachenden Stromes dicht beieinander liegen.

Der Erfindung liegt daher die Aufgabe zugrunde, eine Schaltungsanordnung zur Überwachung eines Stromes vorzuschlagen, die sich durch einen günstigen Abstand zwischen der Ansprechspannung und der Rückfallspannung auszeichnet und somit auch bei Werten des zu überwachenden Stromes, die um die Ansprechspannung herum pendeln, zuverlässig arbeitet.

Zur Lösung dieser Aufgabe ist bei einer Schaltungsanordnung der eingangs angegebenen Art erfindungsgemäß der Abgriff der Reihenschaltung über einen Hilfswiderstand sowohl mit einem Eingangsanschluß der Schalteinheit als auch mit einem Eingangsanschluß des Meßteils verbunden, dessen anderer Eingangsanschluß mit dem von dem Abgriff der Reihenschaltung abgewandten Anschluß des Meßwiderstandes verbunden ist.

Die erfindungsgemäße Schaltungsanordnung hat den Vorteil, daß sie einen definierten Abstand zwischen der Ansprechspannung und der Rückfallspannung aufweist, so daß bei Werten des zu überwachenden Stromes, die etwa der Ansprechspannung entsprechen bzw. um diesen Wert schwanken, ein eindeutiges Verhalten zeigt; das Relais der erfindungsgemäßen Schaltungsanordnung fällt demzufolge nicht schon dann wieder ab, wenn ein der Ansprechspannung proportionaler Wert des zu überwachenden Stromes kurzzeitig verhältnismäßig geringfügig unterschritten ist. Dabei ist dieser Vorteil in günstiger Weise auf schaltungstechnisch einfache Art dadurch erreicht, daß zwischen dem Abgriff der Reihenschaltung und entsprechenden Eingangsanschlüssen der Schalteinheit und des Meßteils lediglich ein Hilfswiderstand angeordnet ist, über den im Ansprechfalle der Strom durch das Relais fließt.

Bei der erfindungsgemäßen Schaltungsanordnung ist vorteilhafterweise mit den Eingangsanschlüssen des Meßteiles ein Transistor mit seiner Basis-Emitter-Strecke in Reihe mit einer weiteren Zenerdiode verbunden, und der Kollektor-Anschluß des Transistors steht mit einem Steuereingang der Schalteinheit in Verbindung. Diese Ausführungsform der erfindungsgemäßen Schaltungsanordnung hat den Vorteil, daß ihre Ansprechspannung im wesentlichen durch die Durchbruchspannung der weiteren Zenerdiode bestimmt ist, wodurch das Ansprechverhalten exakt festgelegt ist.

Bei einer weiteren vorteilhaften Ausführungsform der erfindungsgemäßen Schaltungsanordnung ist der Basis-Emitter-Strecke des Transistors und der weiteren Zenerdiode ein auf Frequenzen nicht höher als die Grundwelle des zu überwachenden Stromes abgestimmtes Tiefpaßfilter vorgeordnet. Durch dieses Tiefpaßfilter wird sichergestellt, daß Oberwellen im zu überwachenden Strom das Ansprechverhalten der Schaltungsanordnung nicht beeinflussen.

Um das Ansprechverhalten der erfindungsgemäßen Schaltungsanordnung dem jeweiligen Bedarf entsprechend einstellen zu können, ist zwischen dem von dem Abgriff der Reihenschaltung abgewandten Anschluß des Hilfswiderstandes und dem von dem Abgriff abgewandten Anschluß des Meßwiderstandes ein Spannungsteiler angeordnet, und ein Abgriff dieses Spannungsteilers ist mit dem einen Eingangsanschluß des Meßteils verbunden.

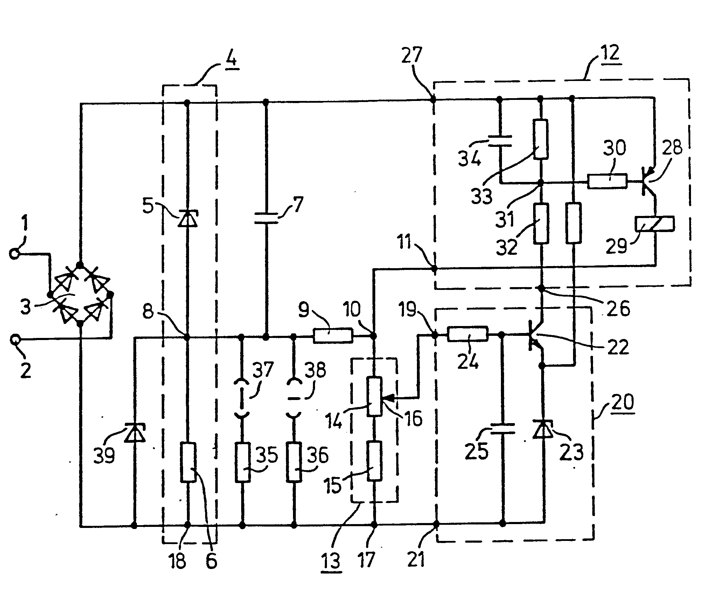

Zur Erläuterung der Erfindung ist in der Figur ein Ausführungsbeispiel der erfindungsgemäßen Schaltungsanordnung zur Überwachung eines Stromes dargestellt.

Der zu überwachende Strom wird der Schaltungsanordnung beispielsweise über einen nicht gezeigten Stromwandler über Eingangsklemmen 1 und 2 zugeführt und mittels eines Brückengleichrichters 3 gleichgerichtet. An dem Brückengleichrichter 3 ist eine Reihenschaltung 4 angeschlossen, die aus einer Zenerdiode 5 in Reihe mit einem Ohmschen Meßwiderstand 6 besteht. Der Zenerdiode 5 ist ein Glättungskondensator 7 parallel geschaltet

Ein gemeinsamer Schaltungspunkt der Zenerdiode 5 und des Meßwiderstandes 6 bildet einen Abgriff 8 der Reihenschaltung 4, an dem ein Hilfswiderstand 9 angeschlossen ist. Das von dem Abgriff 8 abgewandte Anschlußende 10 des Hilfswiderstandes 9 ist einerseits mit einem Anschluß 11 einer Schalteinheit 12 und andererseits mit einem Ende eines Spannungsteilers 13 verbunden, der ohmsche Widerstände 14 und 15 enthält. Der ohmsche Widerstand 14 ist mit einem variablen Abgriff 16 versehen. Das andere Anschlußende 17 des Spannungsteilers 13 ist mit dem von dem Abgriff 8 der Reihenschaltung 4 abgewandten Anschluß l8 des Meßwiderstandes 6 verbunden.

Mit dem Abgriff 16 des Spannungsteilers 14 ist ein Eingangsanschluß 19 eines Meßteiles 20 verbunden, dessen anderer Anschluß 21 mit dem Anschlußende 18 des Meßwiderstandes 6 in Verbindung steht. Das Meßteil 20 enthält einen Transistor 22, mit dessen Basis-Emitter-Strecke eine weitere Zenerdiode 23 in Reihe liegt. Dieser Anordnung ist ein Tiefpaßfilter vorgeordnet, das aus einem Widerstand 24 und einem Kondensator 25 besteht. Der Kollektor-Anschluß des Transistors 22 ist mit einem Steuereingang 26 der Schalteinheit 12 verbunden.

Die Schalteinheit 12 ist mit ihrem anderen Eingangsanschluß 27 an die Zenerdiode 5 der Reihenschaltung 4 angeschlossen, so daß zu ihrer Betriebsspannungsversorgung die Spannung an der Zenerdiode 5 dient. Die Schalteinheit 12 enthält einen Transistor 28, in dessen Emitter-Kollektor-Kreis ein Relais 29 angeordnet ist. Dieses Relais 29 ist mit seinem von dem Kollektor-Anschluß des Transistors 28 abgewandten Ende direkt mit dem einen Eingangsanschluß 11 der Schalteinheit 12 verbunden, während der Emitter-Anschluß des Transistors 28 direkt mit dem anderen Eingangsanschluß 27 der Schalteinheit 12 in Verbindung steht. Im Basis-Stromkreis des Transistors 28 ist ein Widerstand 30 angeordnet, der an einem gemeinsamen Schaltungspunkt 31 von Widerständen 32 und 33 angeschlossen ist, wobei der Widerstand 32 auch mit dem Steuereingang 26 der Schalteinheit 12 verbunden ist. Dem Widerstand 33 ist ein Kondensator 34 parallel geschaltet, durch den ein Einfluß von Spannungsspitzen auf das Ansprechverhalten des Relais 29 verhindert wird.

Wie der Figur ferner zu entnehmen ist, sind dem Meßwiderstand 6 zwei Widerstände 35 und 36 über Steckkontakte 37 und 38 parallel schaltbar; durch diese Widerstände 35 und 36 läßt sich der Ansprechbereich der Schaltungsanordnung verändern.

Eine dem Meßwiderstand 6 parallel liegende zusätzliche Zenerdiode 39 dient lediglich dem Schutz gegen Überspannungen.

Die dargestellte Schaltungsanordnung arbeitet in folgender Weise:

Bei einem Stromfluß durch die Eingangsklemmen 1 und 2 entsteht an der Zenerdiode 5 der Reihenschaltung 4 ein konstanter Spannungsabfall, durch den die Betriebsspannungsversor-20 gung sichergestellt ist. Am Meßwiderstand 6 der Reihenschaltung 4 tritt ein weiterer Spannungsabfall auf, der von dem Meßteil 20 erfaßt wird. Weist der Strom einen derartigen Wert auf, daß die Durchbruchspannung der weiteren Zenerdiode 23 und damit die Ansprechspannung der Schaltungsanordnung er-25 reicht ist, ergibt sich ein Stromfluß durch den Transistor 22 des Meßteiles 20. Dieser Stromfluß bewirkt eine Potentialänderung am Schaltungspunkt 31 der Schalteinheit 12, wodurch deren Transistor 28 leitend wird. Es fließt ein Strom durch das Relais 29, das daraufhin anspricht. Durch den Strom durch 30 das Relais 29 tritt am Hilfswiderstand 9 ein Spannungsabfall auf, durch den die Spannung am Eingang des Meßteiles 20 erhöht wird. Dies führt erwünschterweise dazu, daß das Relais 29 erst dann abfällt, wenn sich der zu überwachende Strom und demzufolge die am Meßwiderstand 6 abfallende Spannung mindestens um einen Anteil erniedrigt, der dem Anteil des Spannungsabfalls am Hilfswiderstand 9 an der am Meßwiderstand 6 abfallenden Spannung infolge des Stromes durch das Relais 29 entspricht. Das heißt, erst wenn der Strom durch die Eingangsanschlüsse 1 und 2 unter einen Wert gefallen ist, der trotz der Erhöhung der Spannung am Eingang des Meßteiles 20 durch den Spannungsabfall am Hilfswiderstand 9 an unter der Durchbruchspannung der weiteren Zenerdiode 23 liegt, fällt das Relais 29 ab. Dies bedeutet, daß der Strom durch die Eingangsklemmen 1 und 2 in diesem Falle erheblich kleiner als beim Ansprechen des Relais 29 ist. Damit ist ein günstiger Abstand zwischen Ansprech- und Rückfallwert erreicht.

Abschließend ist noch darauf hinzuweisen, daß die erfindungsgemäße Schaltungsanordnung selbstverständlich nicht nur zur Überwachung von Wechselströmen geeignet ist, sondern auch zur Überwachung von Gleichströmen eingesetzt werden kann. In letzterem Falle kann selbstverständlich auf einen dem Span-Spannungsteiler vorgeordneten Gleichrichter verzichtet werden.

**Patentansprüche**

1. Schaltungsanordnung zur Überwachung eines Stromes mit einer eingangsseitig angeordneten aus dem zu überwachenden Strom gespeisten Reihenschaltung (4) aus einer Zenerdiode (5) und einem ohmschen Meßwiderstand (6), wobei ein Abgriff (8) der Reihenschaltung (4) von dem gemeinsamen Schaltungspunkt der Zenerdiode (5) und des Meßwiderstandes (6) gebildet ist mit einem mit der Reihenschaltung (4) verbundenen Meßteil (20) und mit einer parallel zur Zenerdiode (5) liegenden Schalteinheit (12) mit einem Relais (29), dadurch gekennzeichnet, daß der Abgriff (8) der Reihenschaltung (4) über einen Hilfswiderstand (9) sowohl mit einem Eingangsanschluß (11) der Schalteinheit (12) als auch mit einem Eingangsanschluß (19) des Meßteils (20) verbunden ist, dessen anderer Anschluß (21) mit dem von dem Abgriff (8) der Reihenschaltung (4) abgewandten Anschluß (18) des Meßwiderstandes (6) verbunden ist.

2. Schaltungsanordnung nach Anspruch 1, dadurch gekennzeichnet, daß mit den Eingangsanschlüssen (19, 21) des Meßteils (20) ein Transistor (22) mit seiner Basis-Emitter-Strecke in Reihe mit einer weiteren Zenerdiode (23) verbunden ist und daß der Kollektor-Anschluß des Transistors (22) mit einem Steuereingang (26) der Schalteinheit (12) in Verbindung steht.

3. Schaltungsanordnung nach Anspruch 2, dadurch gekennzeichnet, daß der Basis-Emitter-Strecke des Transistor (22) und der weiteren Zenerdiode (23) ein auf Frequenzen nicht höher als die Grundwelle des zu überwachenden Stromes abgestimmtes Tiefpaßfilter (24, 25) vorgeordnet ist.

4. Schaltungsanordnung nach einem der vorangehenden Ansprüche, dadurch gekennzeichnet, daß zwischen dem von dem Abgriff (8) des Spannungsteilers (4) abgewandten Anschluß (10) des Hilfswiderstandes (9) und dem von dem Abgriff (8) abgewandten Anschluß (18) des Meßwiderstandes (6) ein weiterer Spannungsteiler (13) liegt und daß ein Abgriff (16) dieses Spannungsteilers (13) mit dem einen Eingangsanschluß (19) des Meßteiles (20) verbunden ist.

## Claims

1. A current-monitoring citcuit arrangement comprising a series circuit (4) at the input fed with the current to be monitored, consisting of a Zener diode (5) and a measuring resistor (6), a tapping (8) of the series circuit (4) formed by the common connection point of the Zener diode (5) and the measuring resistor (6), a measuring component (20) connected to the series circuit (4), and a switching unit (12) parallel to the Zener diode (5) and containing a relay (29), characterised in that the tapping (8) of the series circuit (4) is connected via an auxiliary resistor (9) both to an input terminal (11) of the switching unit (12) and to an input terminal (19) of the measuring component (20), whose other terminal (21) is connected to that terminal (18) of the measuring resistor (6) remote from the tapping (8) of the series circuit (4).

2. A circuit arrangement as claimed in Claim 1, characterised in that the input terminals (19, 21) of the measuring component (20) are connected to the base-emitter path of a transistor (22) in series with a further Zener diode (23), and that the collector terminal of the transistor (22) is connected to a control input (26) of the switching unit (12).

3. A circuit arrangement as claimed in Claim 2, characterised in that the base-emitter path of the transistor (22) and the furher Zener diode (23) is preceded by a low-pass fiiter (24, 25) tuned to frequencies not higher than the fundamental wave of the current to be monitored.

4. A circuit arrangement as claimed in one of the preceding Claims, characterised in that a further voitage divider (13) is arranged between that terminal (10), of the auxiliary resistor (9) remote from the tapping (8) of the voltage divider (4), and that terminal (18) of the measuring resistor (6) remote from the tapping (8), and that a tapping (16) of this voltage divider (13) is connected to the first input terminal (19) of the measuring component (20).

## Revendications

1. Montage pour la surveillance d'un courant, avec un circuit série (4) constitué par une diode Zener (5) et par une résistance ohmique de mesure (6), disposée du côté entrée et alimentée par le courant à surveiler, une prise (8) du circuit série (4) étant constituée par le point du circuit qui est commun à la diode Zener (5) et à la résistance de mesure (6), avec une partie de mesure (20) qui est reliée au circuit série (4), et avec une unité de commutation (12) montée en parallèle sur la diode Zener et pourvue d'un relais (29), caractérisé par le fait que la prise (8) du circuit série (4) est reliée, par l'intermédiaire d'une résistance auxiliaire (9), aussi bien à une borne d'entrée (11) de l'unité de commutation (12) qu'à une borne d'entrée (19) de la partie de mesure (20), dont l'autre borne (21) est reliée à la borne (18) de la résistance de mesure (6) qui est éloignée de la prise (8) du circuit série (4).

2. Montage selon la revendication 1, caractérisé par le fait qu'aux bornes d'entrée (19, 21) de la partie de mesure (20) est relié un transistor (22) par son circuit base-émetteur en série avec une seconde diode Zener (23), et que la borne du collecteur du transistor (22) est reliée à une entrée de commande (26) de l'unité de commutation (12).

3. Montage selon la revendication 2, caractérisé par le fait qu'en amont du circuit base-émetteur du transistor (22) et de la seconde diode Zener, est monté un filtre passe-bas (24, 25) accordé à des fréquences qui ne sont pas supérieures à l'onde fondamentale du courant à surveiller.

4. Montage selon l'une des revendications précédentes, caractérisé par le fait qu'entre la borne (10) de la résistance auxiliaire (9), qui est éloignée de la prise (8) du diviseur de tension (4), et la borne (18) de la résistance de mesure (6), qui est éloignée de la prise (8), est monté un second diviseur de tension (13), et qu'une prise (16) de ce diviseur de tension (13) est reliée à l'une des bornes d'entrée (19) de la partie de mesure (20).